# EUROPÄISCHE PATENTSCHRIFT

(11) **EP 3 168 031 B1**
(45) Veröffentlichungstag und Bekanntmachung des Hinweises auf die Patenterteilung: **08.12.2021**
(21) Anmeldenummer: 16198192.3
(22) Anmeldetag: 10.11.2016
(51) Int. Cl.: B29C 63/00, B29C 35/04, B26D 7/10, B29C 65/10

(54) **HEIZVORRICHTUNG, INSBESONDERE FÜR EINE KANTENSTREIFENAUFBRINGVORRICHTUNG ODER FÜR EINE SCHNEIDVORRICHTUNG ZUM SCHNEIDEN VON FOLIEN ODER WERKSTÜCKEN AUS KUNSTSTOFF ODER HARTSCHAUM ODER FÜR EINE VORRICHTUNG ZUM SCHWEISSEN VON WERKSTÜCKEN**
HEATING DEVICE, IN PARTICULAR FOR AN EDGE STRIP APPLICATION DEVICE OR FOR A CUTTING DEVICE FOR CUTTING FILMS OR WORKPIECES MADE OF PLASTIC OR RIGID FOAM OR FOR A DEVICE FOR WELDING WORKPIECES
DISPOSITIF DE CHAUFFAGE, EN PARTICULIER POUR UN APPLICATEUR DES BANDES LATÉRALES OU POUR UN DISPOSITIF DE COUPE POUR COUPER DES FILMS OU DES PIÈCES EN PLASTIQUE OU EN MOUSSE DURE OU POUR UN DISPOSITIF DE SOUDAGE DE PIÈCES

(30) Priorität: 10.11.2015 DE 102015119373
(43) Veröffentlichungstag der Anmeldung: 17.05.2017
(73) Patentinhaber: Kluge, Holger, 57392 Schmallenberg (DE)
(72) Erfinder: Kluge, Holger, 57392 Schmallenberg (DE)
(74) Vertreter: Manske, Jörg

(56) Entgegenhaltungen:
- WO-A1-2013/076205
- DE-A1- 2 432 957
- US-A- 4 738 196
- US-A- 5 901 270

## Beschreibung

Die vorliegende Erfindung betrifft eine Heizvorrichtung, insbesondere für eine Kantenstreifenaufbringvorrichtung oder für eine Schneidvorrichtung zum Schneiden von Folien oder Werkstücken aus Kunststoff oder Hartschaum oder für eine Vorrichtung zum Schweißen von Werkstücken, umfassend eine Heizeinheit mit einem Gehäuse, innerhalb dessen ein Grundkörper angeordnet ist, der eine Mehrzahl von Luftströmungskanälen aufweist, die sich zwischen einem Lufteintrittsende, durch den ein unter Druck stehendes, gasförmiges Medium, insbesondere Luft, in den Grundkörper einströmen kann, und einem Luftaustrittsende, durch den das unter Druck stehende, gasförmige Medium aus dem Grundkörper ausströmen kann, erstrecken, wobei in jedem der Luftströmungskanäle zumindest ein Heizelement untergebracht ist, mittels dessen das durch den jeweiligen Luftströmungskanal strömende, unter Druck stehende, gasförmige Medium erwärmt werden kann. Weiterhin weist die Heizvorrichtung einen Druckkörper auf, innerhalb dessen die Heizeinheit untergebracht ist, wobei der Druckkörper einen Lufteinlass, durch den das unter Druck stehende, gasförmige Medium in den Druckkörper einströmen kann, und einen Luftauslass, durch den das unter Druck stehende, gasförmige Medium nach der Erwärmung aus dem Druckkörper ausströmen kann, umfasst, und wobei zwischen dem Gehäuse der Heizeinheit und einer Innenwand des Druckkörpers ein Zwischenraum ausgebildet ist.

Aus dem Stand der Technik sind Kantenstreifenaufbringvorrichtungen in unterschiedlichen Ausführungsformen bekannt. Mit Hilfe derartiger Kantenstreifenaufbringvorrichtungen können Kantenstreifen auf die Schmalseiten eines Werkstücks aufgebracht werden. Diese Kantenstreifen, die häufig auch als "Umleimer" bezeichnet werden, können zum Beispiel einseitig einen wärmeaktivierbaren Kleber aufweisen. Dieser Kleber wird in der Kantenstreifenaufbringvorrichtung durch Beaufschlagung mit Heißluft oder einem Heißgas aktiviert, so dass nach dem Aufbringen und Andrücken des Kantenstreifens auf die Schmalseite des Werkstücks eine stoffschlüssige Fügeverbindung des Kantenstreifens mit dieser Schmalseite erhalten werden kann. Teilweise werden die Kantenstreifen erst in der Kantenstreifenaufbringvorrichtung einseitig mit einem Kleber versehen und anschließend mit der Schmalseite des Werkstücks, das insbesondere ein Holzwerkstück sein kann, stoffschlüssig verbunden. Es hat sich gezeigt, dass die Verwendung von Klebern bei der Aufbringung von Kantenstreifen auf die Schmalseiten eines Werkstücks mit einigen Nachteilen verbunden ist. Neben prozesstechnischen Schwierigkeiten besteht häufig das Problem, dass die Kleberschicht nach dem Aufbringen des Kantenstreifens auf das Werkstück für einen Betrachter sichtbar bleibt und so das optische Erscheinungsbild beeinträchtigt.

Um den vorstehend genannten Problemen abzuhelfen, wurden mittlerweile kleberlose, wärmeaktivierbare Kantenstreifen entwickelt, die zum Beispiel durch Beaufschlagung mit Laserlicht oder durch Plasmaverfahren aktiviert werden können. Diese Kantenstreifen bestehen aus zwei Schichten aus unterschiedlichen - vorzugsweise koextrudierten - Kunststoffen. Durch die Beaufschlagung mit Laserlicht wird die der Schmalseite des Werkstücks zugewandte Kunststoffschicht (kurz: Funktionsschicht) aufgeschmolzen und kann mit der Schmalseite verklebt werden. Die Kunststoffschicht auf der Sichtseite (Außenseite) des Kantenstreifens wird demgegenüber durch die Beaufschlagung mit dem Laserlicht nicht verändert. Da sich die beiden Kunststoffschichten zweckmäßigerweise in ihrer Farbgebung nicht unterscheiden, wird ein fugenloses, einheitliches optisches Erscheinungsbild geschaffen. In Fachkreisen wird in diesem Zusammenhang auch von einer so genannten "Laserkante" oder "Nullfuge" gesprochen. Laservorrichtungen zum Aktivieren der Funktionsschicht des Kantenstreifens ermöglichen zwar hohe Arbeitsgeschwindigkeiten, sind aber verhältnismäßig teuer und prozesstechnisch aufwändig zu betreiben. Die aus dem Stand der Technik bereits bekannte Möglichkeit der Aktivierung der Funktionsschicht durch ein Plasma ist ebenfalls prozesstechnisch sehr aufwändig und ermöglicht nur vergleichsweise geringe Arbeitsgeschwindigkeiten.

Daher wurden in der Vergangenheit bereits einige Anstrengungen unternommen, um die Funktionsschicht des Kantenstreifens mittels einer Düsenanordnung mit unter Druck stehender Heißluft mit einer Temperatur von etwa 600° C zu beaufschlagen und dadurch zu aktivieren. Im Vergleich zur Laser- und Plasmaaktivierung ist eine derartige Vorgehensweise prozesstechnisch einfacher und wesentlich kostengünstiger.

Wenn als Heizvorrichtung ein herkömmliches industrielles Heißluftgebläse eingesetzt wird, reicht dessen Leistung allerdings nicht aus, um hohe Arbeitsgeschwindigkeiten zu erreichen. Mit einem herkömmlichen industriellen Heißluftgebläse lassen sich typischerweise Arbeitsgeschwindigkeiten in der Größenordnung von nur 5-6 m/min erreichen. Für industrielle Anwendungen sind demgegenüber Arbeitsgeschwindigkeiten von 20 m/min und mehr wünschenswert.

Mittels einer Kantenstreifenaufbringvorrichtung mit einer Düsenanordnung, wie sie aus der internationalen Patentanmeldung WO 2013/076205 A1 des Anmelders bekannt ist, und einer entsprechend dimensionierten Heizvorrichtung, die der Düsenanordnung Heißluft oder ein Heißgas mit einer Temperatur von etwa 600° C unter hohem Druck in einer Größenordnung von etwa 6 bis 8 bar zur Verfügung stellen kann, können mittlerweile Arbeitsgeschwindigkeiten von 20 m/min erreicht werden. Die zu diesem Zweck verwendeten Heizvorrichtungen, die ebenfalls vom Anmelder entwickelt wurden, haben den Nachteil, dass sie relativ großvolumig sind und dementsprechend viel Platz benötigen. Ein weiterer Nachteil dieser Heizvorrichtungen besteht darin, dass sie eine relativ lange Aufheizzeit benötigen. Teilweise kann es bis zu 20 Minuten dauern, bis die Heizvorrichtungen betriebsbereit sind, so dass sie ausreichend hohe Temperaturen liefern können.

Eine gattungsgemäße Heizvorrichtung ist aus der DE 24 32 957 A1 bekannt.

Die vorliegende Erfindung macht es sich daher zur Aufgabe, eine Heizvorrichtung der eingangs genannten Art zur Verfügung zu stellen, die kompakter als die aus dem Stand der Technik bekannten Heizvorrichtungen ausgeführt ist und insbesondere kürzere Aufheizzeiten und eine wirksame Kühlung ermöglicht.

Die Lösung dieser Aufgabe liefert eine Heizvorrichtung der eingangs genannten Art mit den Merkmalen des kennzeichnenden Teils des Anspruchs 1. Die Unteransprüche betreffen vorteilhafte Weiterbildungen der Erfindung.

Eine erfindungsgemäße Heizvorrichtung zeichnet sich dadurch aus, dass der äußere Druckkörper ein erstes Druckkörperteil und zumindest ein zweites Druckkörperteil aufweist, die vorzugsweise durch eine Flanschverbindung, die eine hitzebeständige Dichtung umfasst, miteinander verbunden sind, wobei der Lufteinlass des äußeren Druckkörpers in einem Bereich einer Mantelfläche des ersten Druckkörperteils des Druckkörpers ausgebildet ist, der an eine Vorderseite des ersten Druckkörperteils des Druckkörpers angrenzt, in der der Luftauslass des Druckkörpers ausgebildet ist, so dass das unter Druck stehende, gasförmige Medium den Zwischenraum durchströmt und das Gehäuse der Heizeinheit vor dem Eintritt in die Luftströmungskanäle umströmen kann. Dadurch wird ein besonders großes Volumen des Zwischenraums zwischen dem Gehäuse der Heizeinheit und der Innenwand des Druckkörpers geschaffen, die in vorteilhafter Weise zu einer großflächigen Umströmung des Gehäuses der Heizeinheit mit dem gasförmigen Medium führt, so dass eine besonders effektive Kühlung des Gehäuses der Heizeinheit bewirkt werden kann. Für eine einfache Montage beziehungsweise Demontage können die Druckkörperteile vorteilhaft miteinander verschraubt sein. Das erste Druckkörperteil ist vorzugsweise so dimensioniert, dass die Heizeinheit vollständig von dem ersten Druckkörperteil aufgenommen werden kann.

Die erfindungsgemäße Heizvorrichtung, die sich insbesondere (aber nicht ausschließlich) für eine Kantenstreifenaufbringvorrichtung oder für eine Schneidvorrichtung zum Schneiden von Werkstücken aus Hartschaum eignet, hat den Vorteil, dass sie sehr kompakt ausgeführt werden kann und im Vergleich zu den aus dem Stand der Technik bekannten Heizvorrichtungen deutlich kürzere Aufheizzeiten bis zum Erreichen der Betriebstemperatur erfordert. Das unter Druck stehende, gasförmige Medium, insbesondere Luft, kann durch den Lufteinlass in den Druckkörper einströmen und durchströmt den Zwischenraum zwischen dem Gehäuse der Heizeinheit und der Innenwand des Druckkörpers und tritt anschließend in die Strömungskanäle des Grundkörpers, der vorzugsweise aus einem Keramikwerkstoff hergestellt ist, ein und wird darin mit Hilfe der Heizelemente erwärmt. Das auf diese Weise erwärmte und unter Druck stehende, gasförmige Medium strömt am Luftaustrittsende des Grundkörpers durch den Luftauslass, an den zum Beispiel die Düsenanordnung einer Kantenstreifenaufbringvorrichtung unmittelbar oder mittelbar angeschlossen werden kann.

Das unter Druck stehende, gasförmige Medium, insbesondere Luft, welches der Heizvorrichtung zugeführt wird, weist eine Temperatur auf, die im Wesentlichen der Umgebungstemperatur (oder darunter, sofern das gasförmige Medium vorher gekühlt wurde) entspricht, da es vorzugsweise nicht vorerwärmt wird. Das gasförmige Medium umströmt das Gehäuse der Heizeinheit und bewirkt dabei eine Zwangskühlung des Gehäuses, das durch den Betrieb der Heizelemente seinerseits erwärmt wird. Durch diese Zwangskühlung wird ein großer Teil der thermischen Energie des Gehäuses der Heizeinheit auf das gasförmige Medium übertragen, wodurch es seinerseits bereits vorerwärmt wird, bevor es in der Heizeinheit von den Heizelementen weiter erwärmt wird. Dadurch wird erreicht, dass die Heizvorrichtung mit sehr hohen Drücken betrieben werden kann. Ein gegebenenfalls innerhalb des Druckkörpers vor der Heizeinheit auftretender Staudruck stellt weder ein thermisches, noch ein technisches Problem dar. Selbst bei Temperaturen des unter Druck stehenden, gasförmigen Mediums von etwa 350° C bis etwa 950° C, die mittels der Heizvorrichtung erreicht werden können, ist es möglich, dass ein Benutzer den Druckkörper außen berührt, ohne dass eine Verbrennungsgefahr besteht. Dieses wirkt sich vorteilhaft auf die Betriebssicherheit aus.

Ein weiterer Vorteil der Heizvorrichtung besteht darin, dass mit variablen Luftmengen gearbeitet werden kann, die insbesondere am Lufteinlass einfach reguliert werden können. So besteht die Möglichkeit, die Heizvorrichtung mit sehr großen Luftmengen (bei geringem Druck) oder beim Anschluss einer kleinen Düsenanordnung, die zum Beispiel Teil einer Schneidvorrichtung zum Schneiden von Werkstücken aus Hartschaum sein kann, mit relativ kleinen Luftmassen (bei hohem Druck) zu betreiben. Auf das Gehäuse der Heizeinheit wirkt dabei in vorteilhafter Weise keine Druckbelastung mehr. Der maximal mögliche Betriebsdruck, der deutlich höher als 10 bar sein kann, hängt insbesondere von der Wandstärke des Druckkörpers ab, die anwendungsspezifisch entsprechend gewählt werden kann. Auch in Kantenstreifenaufbringvorrichtungen können relativ kleine Düsenanordnungen eingesetzt werden, die mit einem hohen Druck (> 10 bar) des gasförmigen Mediums arbeiten können. Diese Düsenanordnungen weisen vorteilhaft zumindest eine Luftaustrittsöffnung auf, die als sehr kleine (vorzugsweise zylindrische) Bohrung ausgebildet ist. Wenn das gasförmige Medium unter hohem Druck aus der Luftaustrittsöffnung austritt, bohrt sich dieses gewissermaßen "nadelartig" in die wärmeaktivierbare Funktionsschicht des Kantenstreifens hinein und wirkt wie eine Heißluftinjektion in die Funktionsschicht und bewirkt eine innere Erwärmung derselben. Eine derartige Heißluftinjektion, die sehr gezielt erfolgen kann, ist nicht auf die Verwendung in Kantenstreifenaufbringvorrichtungen beschränkt, sondern kann auch in anderen Vorrichtungen zur Bearbeitung von Werkstücken zum Einsatz kommen.

Vorzugsweise kann die erfindungsgemäße Heizvorrichtung in einer Kantenstreifenaufbringvorrichtung mit einer Düsenanordnung, wie sie aus der internationalen Patentanmeldung WO 2013/076205 A1 bekannt ist, verwendet werden. Die Heizvorrichtung kann der Düsenanordnung das gasförmige Medium unter hohem Druck im Bereich von etwa 6 bis 8 bar (und mehr) und mit einer Temperatur von etwa 600° C (und mehr) zur Verfügung stellen, so dass mittels der Kantenstreifenaufbringvorrichtung Arbeitsgeschwindigkeiten von 25 bis 30 m/min und mehr erreicht werden können. Dadurch können die bislang erzielbaren Arbeitsgeschwindigkeiten von etwa 20 m/min in vorteilhafter Weise übertroffen werden, obwohl die Heizvorrichtung deutlich kompakter ausgeführt werden kann als die bislang verwendeten Heizvorrichtungen.

Allgemein besteht ein Zusammenhang zwischen der erreichbaren Arbeitsgeschwindigkeit, die mit der Kantenstreifenaufbringvorrichtung erreicht werden kann, und dem Druck und der Temperatur des gasförmigen Mediums, das von der Heizvorrichtung zur Verfügung gestellt wird. Sinnvolle Temperaturbereiche für die Aktivierung kleberloser, wärmeaktivierbarer Kantenstreifen die aus zwei Schichten aus unterschiedlichen - vorzugsweise koextrudierten - Kunststoffen bestehen, liegen typischerweise zwischen etwa 300° C und 950° C. Der Arbeitsdruck des gasförmigen Mediums, der auf einfache Weise einlassseitig an der Heizvorrichtung eingestellt werden kann, liegt dabei vorzugsweise in einem Bereich zwischen etwa 1,5 bar und etwa 10 bar. Wenn eine Heißluftinjektion in der oben beschriebenen Weise erfolgt, ist der Arbeitsdruck vorzugsweise > 10 bar.

In einer bevorzugten Ausführungsform wird vorgeschlagen, dass der Lufteinlass als rohrförmiger Anschlussstutzen ausgebildet ist. An diesen Anschlussstutzen, der vorzugsweise aus Edelstahl hergestellt ist, kann auf einfache Weise zum Beispiel ein Gebläse, ein Kompressor, eine Druckluftleitung oder eine sonstige Quelle für das unter Druck stehende, gasförmige Medium angeschlossen werden.

In einer besonders bevorzugten Ausführungsform wird vorgeschlagen, dass das zweite Druckkörperteil so ausgebildet ist, dass es vor dem Lufteintrittsende des Grundkörpers der Heizeinheit einen Druckraum bildet.

In einer vorteilhaften Ausführungsform kann vorgesehen sein, dass der Druckkörper, vorzugsweise das zweite Druckkörperteil, eine Leitungsdurchführung umfasst, durch die elektrische Anschlussleitungen, welche an die Heizelemente angeschlossen sind, hindurchgeführt sind.

In einer besonders vorteilhaften Ausführungsform besteht die Möglichkeit, dass die Leitungsdurchführung als Metallrohr ausgebildet ist, durch das die elektrischen Anschlussleitungen elektrisch voneinander isoliert hindurchgeführt sind, wobei die elektrischen Anschlussleitungen vorzugsweise mittels eines Keramikzements stoffschlüssig mit dem Metallrohr verbunden sind. Dadurch wird in vorteilhafter Weise eine druckdichte, hochtemperaturfeste Durchführung der elektrischen Anschlussleitungen durch die Außenwandung des Druckkörpers erreicht. Der Keramikzement bewirkt eine elektrische Isolierung.

In einer bevorzugten Ausführungsform kann vorgesehen sein, dass das Gehäuse der Heizeinheit in Strömungsrichtung der erwärmten Luft hinter dem Grundkörper einen Heißluftaustrittsabschnitt aufweist, der in den Luftauslass des Druckkörpers mündet oder sich abschnittsweise durch den Luftauslass hindurch erstreckt. Vorzugsweise ist der Heißluftaustrittsabschnitt abschnittsweise dicht mit dem Luftauslass des Druckkörpers verschweißt.

In einer vorteilhaften Weiterbildung kann vorgesehen sein, dass der Heißluftaustrittsabschnitt sich zu dem an der Vorderseite des Druckkörpers ausgebildeten Luftauslass hin verjüngend, insbesondere trichterförmig, ausgebildet ist. Dadurch können die Strömungsverhältnisse in vorteilhafter Weise verbessert werden.

In einer besonders vorteilhaften Weiterbildung wird vorgeschlagen, dass der Zwischenraum in mindestens zwei Rohrkammern unterteilt ist, durch die das unter Druck stehende, gasförmige Medium von außen nach innen strömen kann. Bei dieser Durchströmung gewinnt das Medium bereits an Temperatur und kühlt zugleich den Druckkörper an dessen Außenseite, so dass bei einer Berührung des Druckkörpers keine Verbrennungsgefahr besteht. Da das Medium bereits vorgewärmt durch die Heizelemente der Heizeinheit strömen kann, weist die Heizvorrichtung insgesamt eine höhere Energieeffizienz auf.

Gemäß einem weiteren Aspekt betrifft die vorliegende Erfindung eine Kantenstreifenaufbringvorrichtung zur Beaufschlagung eines kleberlosen, wärmeaktivierbaren oder mit Heißkleber beschichteten Kantenstreifens oder Werkstücks mit Heißluft, umfassend eine Heizvorrichtung und eine Düsenanordnung, die luftauslassseitig an die Heizvorrichtung angeschlossen ist. Die erfindungsgemäße Kantenstreifenaufbringvorrichtung zeichnet sich dadurch aus, dass die Heizvorrichtung nach einem der Ansprüche 1 bis 8 ausgebildet ist. Die Vorteile der erfindungsgemäßen Heizvorrichtung in einer Kantenstreifenaufbringvorrichtung wurden oben bereits ausführlich erläutert.

Weiterhin eignet sich die hier vorgestellte Heizvorrichtung zum Beispiel für eine Schneidvorrichtung zum Schneiden von Folien oder Werkstücken aus Kunststoff oder Hartschaum oder für eine Vorrichtung zum Schweißen von Werkstücken. Abhängig von der Wandstärke des Druckkörpers können Arbeitsdrücke bis zu 1000 bar erreicht werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht einer Heizvorrichtung, die gemäß einem ersten Ausführungsbeispiel der vorliegenden Erfindung ausgeführt ist und die insbesondere für eine Verwendung in einer Kantenstreifenaufbringvorrichtung oder in einer Schneidvorrichtung zum Schneiden von Folien oder Werkstücken aus Kunststoff oder Hartschaum oder in einer Vorrichtung zum Schweißen von Werkstücken eingerichtet ist,
- Fig. 2: eine Seitenansicht der Heizvorrichtung gemäß Fig. 1,
- Fig. 3: eine Seitenansicht der Heizvorrichtung gemäß Fig. 1, wobei ein Teil eines äußeren Druckkörpers weggeschnitten wurde, um eine Anordnung einer Heizeinheit innerhalb des Druckkörpers zu veranschaulichen,
- Fig. 4: einen Längsschnitt durch die Heizvorrichtung gemäß Fig. 1,
- Fig. 5: einen weiteren Längsschnitt durch die Heizvorrichtung gemäß Fig. 1,
- Fig. 6: eine perspektivische Ansicht, die einen Lufteintrittsbereich der Heizeinheit der Heizvorrichtung veranschaulicht,
- Fig. 7: eine weitere perspektivische Ansicht, die ebenfalls den Lufteintrittsbereich der Heizeinheit veranschaulicht,
- Fig. 8: einen Längsschnitt durch eine Heizvorrichtung, die gemäß einem zweiten Ausführungsbeispiel der vorliegenden Erfindung ausgeführt ist.

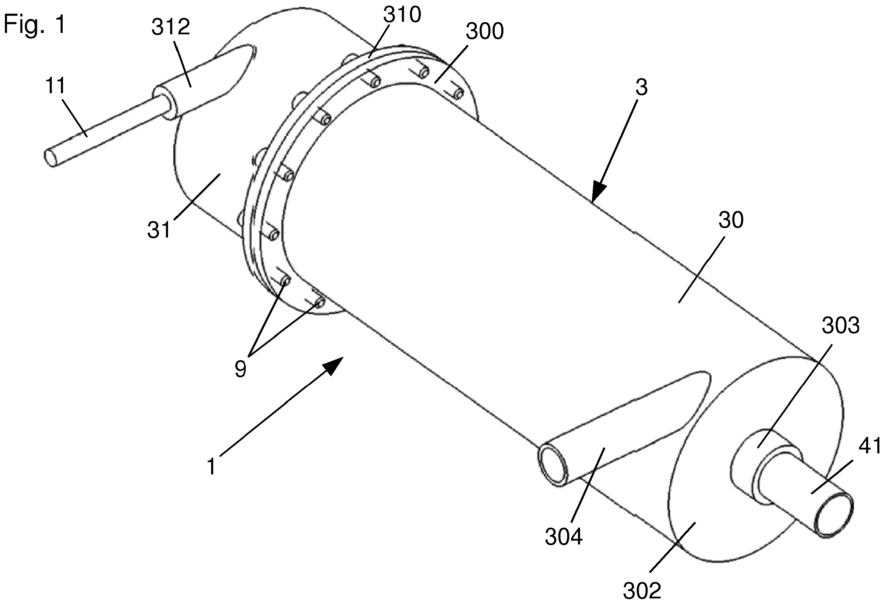

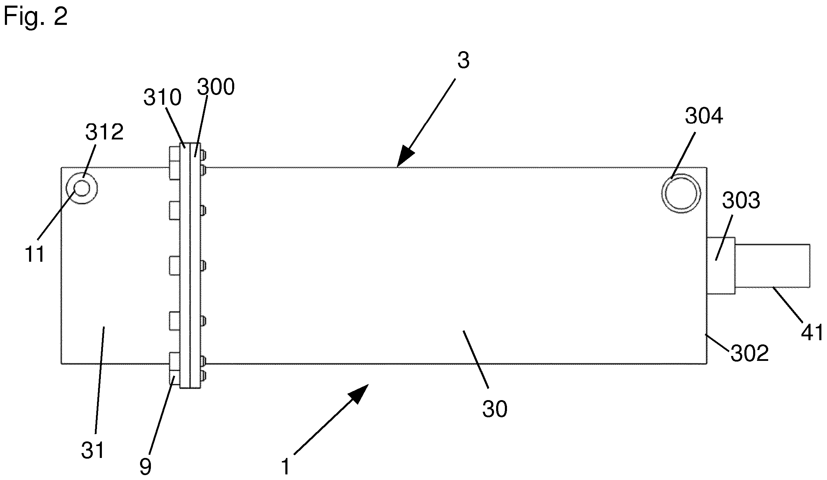

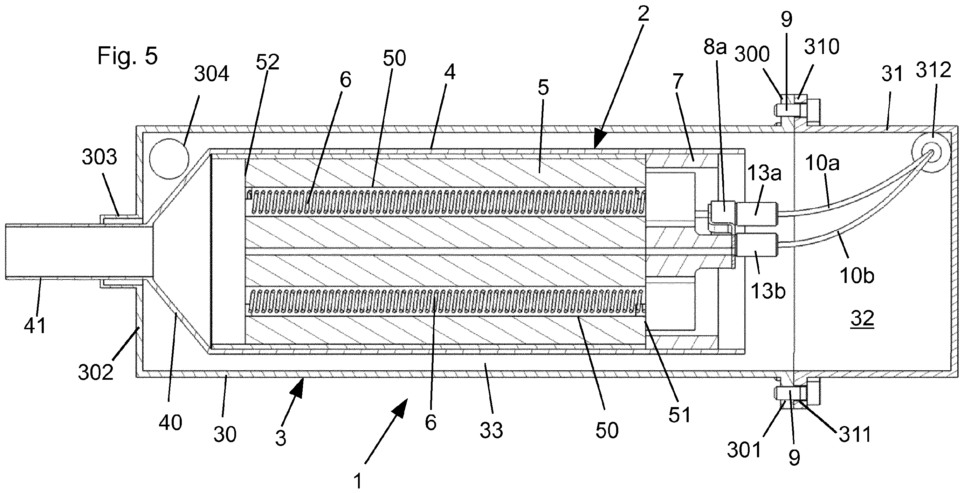

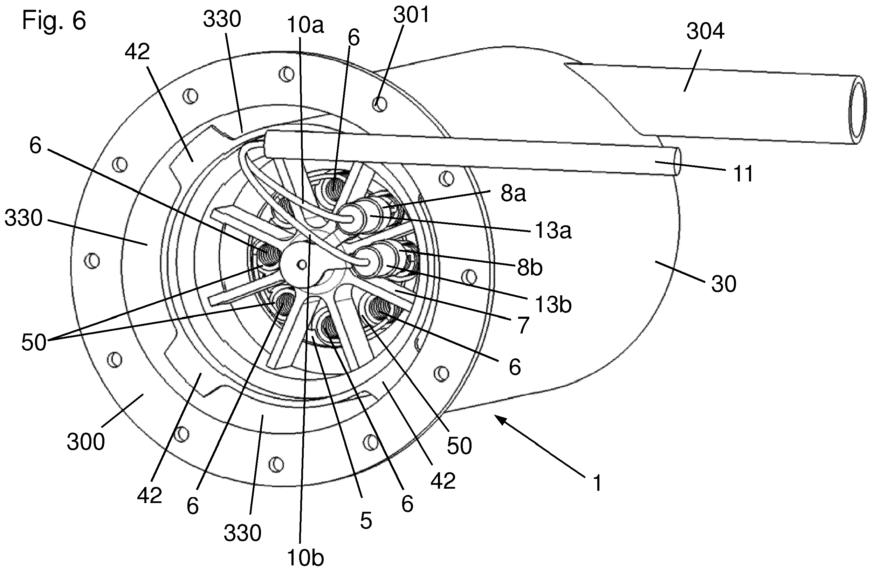

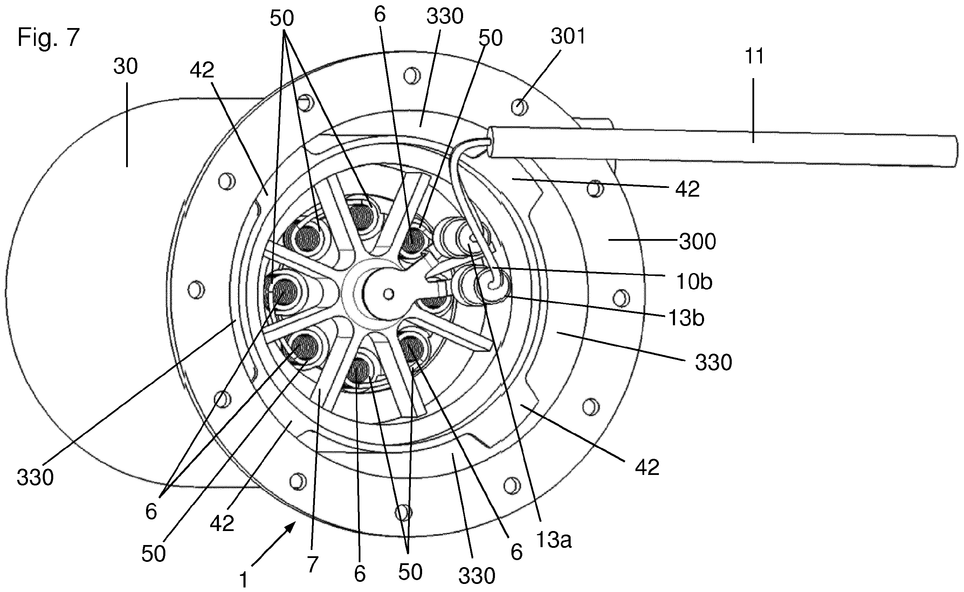

Unter Bezugnahme auf Fig. 1 bis 7 umfasst eine Heizvorrichtung 1, die gemäß einem ersten Ausführungsbeispiel der vorliegenden Erfindung ausgeführt ist und die insbesondere für eine Verwendung in einer Kantenstreifenaufbringvorrichtung oder in einer Schneidvorrichtung zum Schneiden von Folien oder Werkstücken aus Kunststoff oder Hartschaum, der zum Beispiel aus expandiertem Polystyrol (EPS) hergestellt sein kann, oder in einer Vorrichtung zum Schweißen von Werkstücken eingerichtet ist, eine Heizeinheit 2, die dazu ausgebildet ist, Heißluft oder Heißgas unter hohem Druck bei Temperaturen von etwa 300°C bis etwa 950° C auszustoßen.

Die Heizeinheit 2 ist in einem äußeren Druckkörper 3 untergebracht, der in dem hier gezeigten Ausführungsbeispiel zweiteilig ausgeführt ist. Der Druckkörper 3 weist ein erstes hohlzylindrisches Druckkörperteil 30 auf, welches vorliegend so dimensioniert ist, dass es die Heizeinheit 2 vollständig aufnehmen kann. Ein zweites hohlzylindrisches Druckkörperteil 31 schließt den Druckkörper 3 vor der Heizeinheit 2 ab und bildet vor dieser einen Druckraum 32. Jedes der beiden Druckkörperteile 30, 31 weist einen ringförmigen Anschlussflansch 300, 310 mit einer Mehrzahl paarweise miteinander korrespondierender Bohrungen 301, 311 auf, durch die jeweils eine Befestigungsschraube 9 hindurchgeführt werden kann, um die beiden Druckkörperteile 30, 31 unter Zwischenlage eines hitzebeständigen Dichtungselements lösbar miteinander zu verbinden. Das Dichtungselement ist so ausgebildet, dass es diese Flanschverbindung auch bei hohen Temperaturen sowie bei hohen, innerhalb des Druckkörpers 3 herrschenden Drücken wirksam abdichten kann und in diesem Bereich somit einen Heißluftbeziehungsweise Heißgasaustritt wirksam verhindern kann.

Vorzugsweise sind die beiden Druckkörperteile 30, 31 aus Edelstahl hergestellt, da sich dieser Werkstoff insbesondere durch seine Hitzebeständigkeit und Korrosionsbeständigkeit auszeichnet. Alternativ können zur Herstellung der beiden Druckkörperteile 30, 31 auch andere hitzebeständige Werkstoffe verwendet werden. Das erste Druckkörperteil 30 weist an einer dem Anschlussflansch 300 gegenüberliegenden Vorderseite 302 einen hohlzylindrischen, sich nach außen ersteckenden Luftauslass 303 auf. In einem an die Vorderseite 302 angrenzenden Bereich weist das erste Druckkörperteil 30 in seiner Mantelfläche einen Lufteinlass 304 auf, der vorliegend als rohrförmiger Anschlussstutzen ausgebildet ist, an den zum Beispiel ein Gebläse, ein Kompressor, eine Druckluftleitung oder eine andere Quelle für ein unter Druck stehendes, gasförmiges Medium, wie zum Beispiel Luft, angeschlossen werden kann. Der Lufteinlass 304, der vorzugsweise ebenfalls aus Edelstahl hergestellt ist, erstreckt sich in diesem Ausführungsbeispiel im Wesentlichen tangential zur Mantelfläche des ersten Druckkörperteils 30.

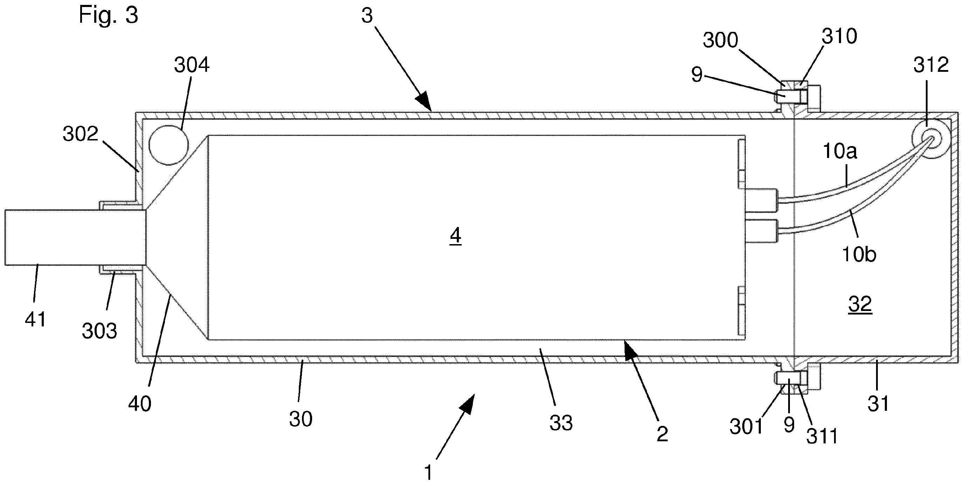

Die Heizeinheit 2 weist ein Gehäuse 4 auf, das abschnittsweise im Wesentlichen hohlzylindrisch ausgebildet ist und vorzugsweise aus Edelstahl hergestellt ist. Wie insbesondere in Fig. 3 bis 5 zu erkennen, ist die Heizeinheit 2 von einer Innenwand des Druckkörpers 3 derart beabstandet angeordnet, dass zwischen der Innenwand des Druckkörpers 3 und dem Gehäuse 4 der Heizeinheit 2 ein sich in Umfangsrichtung des Gehäuses 4 erstreckender Zwischenraum 33 ausgebildet ist, welcher von dem durch den Lufteinlass 304 einströmenden und unter Druck stehenden, gasförmigen Medium durchströmt werden kann. Zum Zwecke der Beabstandung von der Innenwand des Druckkörpers 3 und der Zentrierung innerhalb des Druckkörpers 3 weist das Gehäuse 4 der Heizeinheit 2 an einer Stirnseite mehrere Distanzelemente 42 auf, die sich zwischen dem Gehäuse 4 und der Innenwand des Druckkörpers 3 erstrecken und vorzugsweise integral mit dem Gehäuse 4 ausgebildet sind. Zwischen zwei benachbarten Distanzelementen 42, die in diesem Ausführungsbeispiel kragenartig ausgebildet sind, ist jeweils eine Luftaustrittsöffnung 330 ausgebildet, durch die das unter Druck stehende, gasförmige Medium nach dem Hindurchtritt durch den Zwischenraum 33 in den Druckraum 32 vor der Heizeinheit 2 einströmen kann.

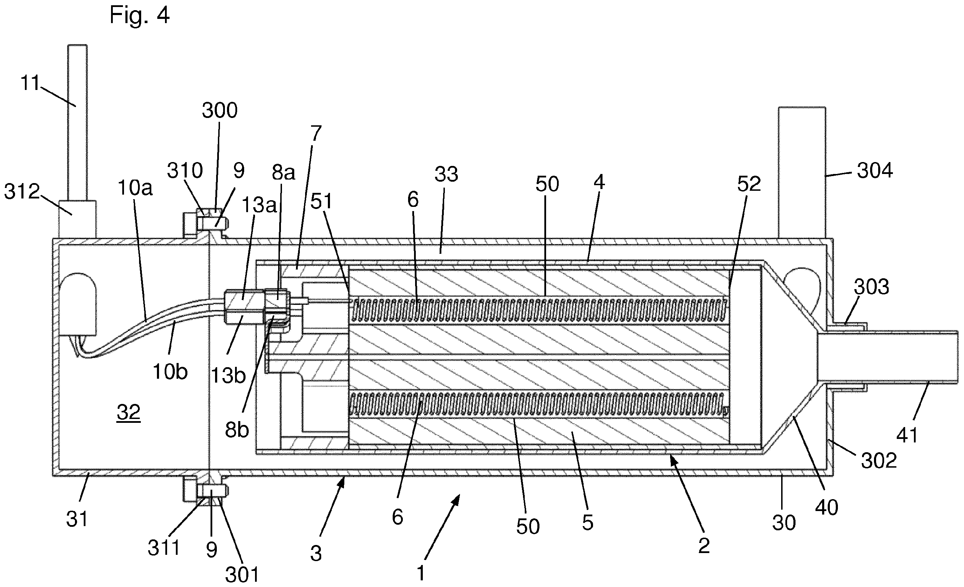

Innerhalb des Gehäuses 4 der Heizeinheit 2 ist ein Grundkörper 5 untergebracht, der aus einem hochtemperaturfesten Werkstoff, insbesondere aus einem Keramikwerkstoff, hergestellt ist, so dass er vorzugsweise Temperaturen bis zu 1000° C standhalten kann, ohne durch den Temperatureinfluss beschädigt zu werden. Der Grundkörper 5 kann einstückig oder auch aus mehreren Segmenten hergestellt sein. Wie in den Figuren 4 bis 7 zu erkennen, sind in dem Grundkörper 5 mehrere Strömungskanäle 50 ausgebildet, die sich über die gesamte Länge des Grundkörpers 5 von einem Lufteintrittsende 51, das an den Druckraum 32 angrenzt, zu einem Luftaustrittsende 52 erstrecken. In jedem der Strömungskanäle 50 ist jeweils zumindest ein spiralförmiges elektrisches Heizelement 6 angeordnet, welches sich vorzugsweise ebenfalls über die gesamte Länge des betreffenden Strömungskanals 50 erstreckt.

Vor einer ersten Stirnseite des Grundkörpers 5, welche das Lufteintrittsende 51 bildet, ist ein Halteelement 7 angeordnet, welches ebenfalls aus einem hochtemperaturfesten Werkstoff, insbesondere aus einem Keramikwerkstoff, hergestellt ist. Das Halteelement 7 ist in diesem Ausführungsbeispiel sternförmig ausgebildet und dient dem Zweck, eine Anzahl elektrischer Anschlussmittel 8a, 8b zu halten, die für die elektrische Versorgung der Heizelemente 6 vorgesehen sind. An jedes der elektrischen Anschlussmittel 8a, 8b ist ein Anschlussstecker 13a, 13b einer elektrischen Anschlussleitung 10a, 10b angeschlossen. Das zweite Druckkörperteil 31 weist eine Leitungsdurchführung 312 auf, durch die die elektrischen Anschlussleitungen 10a, 10b, die abschnittsweise mit einer gemeinsamen Ummantelung 11, die vorzugsweise aus Glasseide hergestellt ist, versehen sind, hindurchgeführt sind, so dass sie für den Betrieb der Heizeinheit 2 an ein elektrisches Versorgungsnetz angeschlossen werden können. Die Leitungsdurchführung 312 ist als Metallrohr, das vorzugsweise aus Edelstahl hergestellt ist, ausgebildet, durch das die elektrischen Anschlussleitungen 10a, 10b mit der Ummantelung 11 hindurchgeführt sind. Vorzugsweise sind die elektrischen Anschlussleitungen 10a, 10b mit der Ummantelung 11 mittels eines Keramikzements stoffschlüssig mit dem Metallrohr verbunden. Der Keramikzement bewirkt ferner eine elektrische Isolierung.

Das Gehäuse 4 der Heizeinheit 2 weist in Strömungsrichtung der erwärmten Luft hinter dem Grundkörper 5 in einem der Vorderseite 302 des Druckkörpers 3 zugewandten Bereich einen sich verjüngenden, vorliegend trichterförmig ausgebildeten Heißluftaustrittsabschnitt 40 auf, der an seinem äußeren Ende einen hohlzylindrischen Anschlussstutzen 41 aufweist, der sich durch den hohlzylindrischen Luftauslass 303 an der Vorderseite 302 des ersten Druckkörperteils 30 des Druckkörpers 3 erstreckt und dicht mit diesem verschweißt ist. An diesen Anschlussstutzen 41 des trichterförmigen Heißluftaustrittsabschnitts 40 kann zum Beispiel eine Düsenanordnung einer Kantenstreifenaufbringvorrichtung zur Beaufschlagung eines kleberlosen, wärmeaktivierbaren oder mit Heißkleber beschichteten Kantenstreifens oder Werkstücks mit Heißluft angeschlossen werden, so dass der Düsenanordnung das unter Druck stehende und von der Heizeinheit 2 erhitzte gasförmige Medium zur Verfügung gestellt werden kann. Typische Arbeitsdrücke liegen in der Größenordnung von etwa 6 bis 8 bar (und mehr). Eine Verwendung der Heizvorrichtung 1 in einer Schneidvorrichtung zum Schneiden von Werkstücken aus Hartschaum ist ebenfalls denkbar.

Nachfolgend soll das grundlegende Funktionsprinzip der hier vorgestellten Heizvorrichtung 1 näher erläutert werden. Wie oben bereits erwähnt, kann durch den Lufteinlass 304, der vorliegend in der Mantelfläche des ersten Druckkörperteils 30 ausgebildet ist, das unter Druck stehende, gasförmige Medium, insbesondere Luft, in den Druckkörper 3 eingebracht werden. Das unter Druck stehende, gasförmige Medium durchströmt den Zwischenraum 33 zwischen dem Gehäuse 4 der Heizeinheit 2 und der Innenwand des Druckkörpers 3 und tritt durch die Luftaustrittsöffnungen 330 aus dem Zwischenraum 33 in den Druckraum 32 vor der Heizeinheit 2 ein. Am Lufteintrittsende 51 des Grundkörpers 5 tritt das unter Druck stehende, gasförmige Medium dann in die Strömungskanäle 50 des Grundkörpers 5 der Heizeinheit 2 ein und wird darin mit Hilfe der bestromten elektrischen Heizelemente 6 erwärmt. Das auf diese Weise erwärmte gasförmige Medium strömt am Luftaustrittsende 52 des Grundkörpers 5 unter hohem Druck in den vorliegend trichterförmigen Heißluftaustrittsabschnitt 40 hinein und tritt aus dem Anschlussstutzen 41 aus, der sich durch den Luftauslass 303 des Druckkörpers 3 hindurch erstreckt und an den zum Beispiel die Düsenanordnung einer Kantenstreifenaufbringvorrichtung angeschlossen werden kann.

Das unter Druck stehende, gasförmige Medium, insbesondere Luft, welches der Heizvorrichtung 1 zugeführt wird, weist eine Temperatur auf, die im Wesentlichen der Umgebungstemperatur (oder darunter, sofern das gasförmige Medium vorher gekühlt wurde) entspricht, da es vorzugsweise nicht vorerwärmt wird. Das gasförmige Medium umströmt das Gehäuse 4 der Heizeinheit 2 und bewirkt dabei eine Zwangskühlung des Gehäuses 4, das durch den Betrieb der Heizelemente 6 seinerseits erwärmt wird. Durch diese Zwangskühlung wird ein großer Teil der thermischen Energie des Gehäuses 4 der Heizeinheit 2 auf das gasförmige Medium übertragen, wodurch es vorerwärmt wird, bevor es in der Heizeinheit 2 von den Heizelementen 6 weiter erwärmt wird. Dadurch wird erreicht, dass die Heizvorrichtung 1 mit sehr hohen Drücken betrieben werden kann. Ein Staudruck innerhalb des Druckkörpers 3 stellt weder ein thermisches, noch ein technisches Problem dar.

Ein weiterer Vorteil der Heizvorrichtung 1 besteht darin, dass mit variablen Luftmengen gearbeitet werden kann. So besteht zum Beispiel die Möglichkeit, die Heizvorrichtung 1 mit sehr großen Luftmengen (bei geringem Druck) oder beim Anschluss einer kleinen Düsenanordnung, die zum Beispiel Teil einer Schneidvorrichtung zum Schneiden von Werkstücken aus Hartschaum sein kann, mit relativ kleinen Luftmassen (bei hohem Druck) zu betreiben. Auf das Gehäuse 4 der Heizeinheit 2 wirkt keine Druckbelastung mehr. Die Druckregulierung kann einlassseitig sehr einfach vorgenommen werden.

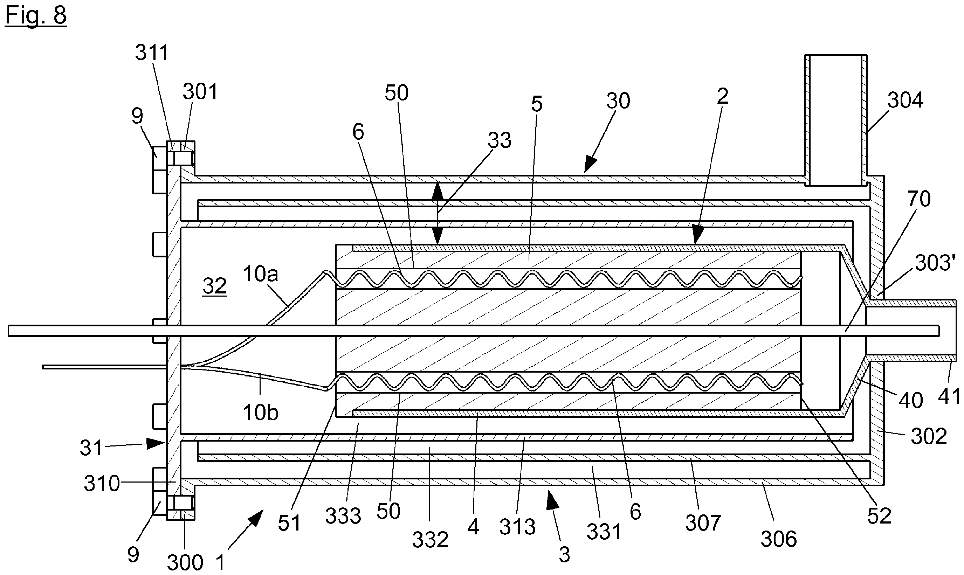

Unter Bezugnahme auf Fig. 8 soll nachfolgend ein zweites Ausführungsbeispiel einer Heizvorrichtung 1 näher erläutert werden. Die Heizvorrichtung 1 weist wiederum eine Heizeinheit 2 auf, die dazu ausgebildet ist, Heißluft oder Heißgas unter hohem Druck bei Temperaturen von etwa 300°C bis etwa 950° C auszustoßen.

Der äußere Druckkörper 3, in dem die Heizeinheit 2 untergebracht ist, ist wiederum zweiteilig ausgeführt, wobei ein erstes hohlzylindrisches Druckkörperteil 30 so dimensioniert ist, dass es die Heizeinheit 2 vollständig aufnehmen kann. Ein zweites hohlzylindrisches Druckkörperteil 31 schließt den Druckkörper 3 vor der Heizeinheit 2 ab und bildet vor dieser einen Druckraum 32. Jedes der beiden Druckkörperteile 30, 31, die vorzugsweise aus Edelstahl hergestellt sind, weist einen Anschlussflansch 300, 310 mit einer Mehrzahl paarweise miteinander korrespondierender Bohrungen 301, 311 auf, durch die jeweils eine Befestigungsschraube 9 hindurchgeführt werden kann, um die beiden Druckkörperteile 30, 31 - vorzugsweise unter Zwischenlage eines hitzebeständigen Dichtungselements - lösbar miteinander zu verbinden. Dieses Dichtungselement ist so ausgebildet, dass es diese Flanschverbindung auch bei hohen Temperaturen sowie bei hohen, innerhalb des Druckkörpers 3 herrschenden Drücken wirksam abdichten kann und in diesem Bereich somit einen Heißluft- beziehungsweise Heißgasaustritt wirksam verhindern kann.

Das erste Druckkörperteil 30 weist an einer dem Anschlussflansch 300 gegenüberliegenden Vorderseite 302 einen kreisrunden Luftauslass 303' auf. In einem an die Vorderseite 302 angrenzenden Bereich weist das erste Druckkörperteil 30 in seiner Mantelfläche einen Lufteinlass 304 auf, der vorliegend als rohrförmiger Anschlussstutzen ausgebildet ist, an den zum Beispiel ein Gebläse, ein Kompressor, eine Druckluftleitung oder eine andere Quelle für ein unter Druck stehendes, gasförmiges Medium, wie zum Beispiel Luft, angeschlossen werden kann. Der Lufteinlass 304 erstreckt sich in diesem Ausführungsbeispiel im Wesentlichen tangential zur Mantelfläche des ersten Druckkörperteils 30.

Das erste Druckkörperteil 30 weist vorliegend ein Außenrohr 306, das eine druckdichte Außenhülle des Druckkörpers 3 bildet, sowie ein in radialer Richtung weiter innenliegendes und sich parallel zum Außenrohr 306 erstreckendes Innenrohr 307 auf. Das zweite Druckkörperteil 31 weist ein Innenrohr 313 auf, das in radialer Richtung weiter innen als das Innenrohr 307 des ersten Druckkörperteils 30 angeordnet ist und sich parallel zu diesem erstreckt.

Die Heizeinheit 2 weist ein Gehäuse 4 auf, das abschnittsweise im Wesentlichen hohlzylindrisch ausgebildet ist und vorzugsweise aus Edelstahl hergestellt ist. Die Heizeinheit 2 ist von einer Innenwand des Druckkörpers 3, die durch die Innenwand des Außenrohrs 306 gebildet ist, beabstandet angeordnet, so dass zwischen der Innenwand des Druckkörpers 3 und dem Gehäuse 4 der Heizeinheit 2 ein sich in Umfangsrichtung des Gehäuses 4 erstreckender Zwischenraum 33 ausgebildet ist, welcher von dem durch den Lufteinlass 304 einströmenden und unter Druck stehenden Medium durchströmt werden kann.

Dadurch, dass sich das Innenrohr 307 des ersten Druckkörperteils 30 und das Innenrohr 313 des zweiten Druckkörperteils 31 in den Zwischenraum 33 zwischen der Heizeinheit 2 und dem Außenrohr 306 hinein erstrecken, sind zwischen dem Außenrohr 306 und dem Innenrohr 307 des ersten Druckkörperteils 30 eine erste Rohrkammer 331, zwischen dem Innenrohr 307 des ersten Druckkörperteils 30 und dem Innenrohr 313 des zweiten Druckkörperteils 31 eine zweite Rohrkammer 332 und zwischen dem Innenrohr 307 des zweiten Druckkörperteils 31 und der Heizeinheit 2 eine dritte Rohrkammer 333. Die dritte Rohrkammer 333 mündet dabei in den Druckraum 32 vor der Heizeinheit. Somit ist der Zwischenraum 33 in drei Rohrkammern 332, 332, 333 unterteilt.

Wie in Fig. 8 zu erkennen, erstrecken sich die beiden Innenrohre 307, 313 nicht über die gesamte Länge des Druckkörpers 3. Das bedeutet, dass das Innenrohr 307 des ersten Druckkörperteils 3 vom Anschlussflansch 310 des zweiten Druckkörperteils 31 in axialer Richtung beabstandet ist und das Innenrohr 313 des zweiten Druckkörperteils 31 von der Vorderseite 302 des ersten Druckkörperteils 30 in axialer Richtung beabstandet ist. Dadurch werden Strömungspassagen zwischen der ersten Rohrkammer 331 und der zweiten Rohrkammer 332 sowie zwischen der zweiten Rohrkammer 332 und der dritten Rohrkammer 333 geschaffen, durch die das unter Druck stehende Medium, das mittels der Heizeinheit 2 aufgeheizt werden soll, strömen kann.

Innerhalb des Gehäuses 4 der Heizeinheit 2 ist ein Grundkörper 5 untergebracht, der aus einem hochtemperaturfesten Werkstoff, insbesondere aus einem Keramikwerkstoff, hergestellt ist, so dass er vorzugsweise Temperaturen bis zu 1000° C standhalten kann, ohne durch den Temperatureinfluss beschädigt zu werden. Der Grundkörper 5 kann einstückig oder auch aus mehreren Segmenten hergestellt sein. Wie in Fig. 8 zu erkennen, sind in dem Grundkörper 5 mehrere Strömungskanäle 50 ausgebildet, die sich über die gesamte Länge des Grundkörpers 5 von einem Lufteintrittsende 51, das an den Druckraum 32 angrenzt, zu einem Luftaustrittsende 52 erstrecken. In jedem der Strömungskanäle 50 ist jeweils zumindest ein elektrisches Heizelement 6 angeordnet, welches sich vorzugsweise ebenfalls über die gesamte Länge des betreffenden Strömungskanals 50 erstreckt.

Der Anschlussflansch 310 des zweiten Druckkörperteils 31 weist eine Leitungsdurchführung auf, durch die elektrische Anschlussleitungen 10a, 10b, die an die Heizelemente 6 angeschlossen sind, hindurchgeführt sind, so dass sie für den Betrieb der Heizeinheit 2 an ein elektrisches Versorgungsnetz angeschlossen werden können.

Das Gehäuse 4 der Heizeinheit 2 weist in Strömungsrichtung des erwärmten Mediums hinter dem Grundkörper 5 in einem der Vorderseite 302 des Druckkörpers 3 zugewandten Bereich einen sich verjüngenden, vorliegend trichterförmig ausgebildeten Heißluftaustrittsabschnitt 40 auf, der an seinem äußeren Ende einen hohlzylindrischen Anschlussstutzen 41 aufweist, der sich durch den kreisrunden Luftauslass 303' an der Vorderseite 302 des ersten Druckkörperteils 30 des Druckkörpers 3 erstreckt und dicht mit diesem verschweißt ist. An diesen Anschlussstutzen 41 des trichterförmigen Heißluftaustrittsabschnitts 40 kann zum Beispiel eine Düsenanordnung einer Kantenstreifenaufbringvorrichtung zur Beaufschlagung eines kleberlosen, wärmeaktivierbaren oder mit Heißkleber beschichteten Kantenstreifens oder Werkstücks mit Heißluft angeschlossen werden, so dass der Düsenanordnung das unter Druck stehende und von der Heizeinheit 2 erhitzte gasförmige Medium zur Verfügung gestellt werden kann. Typische Arbeitsdrücke liegen in der Größenordnung von etwa 6 bis 8 bar (und mehr). Eine Verwendung der Heizvorrichtung 1 in einer Schneidvorrichtung zum Schneiden von Werkstücken aus Hartschaum ist ebenfalls denkbar.

Nachfolgend soll das grundlegende Funktionsprinzip des zweiten Ausführungsbeispiels der Heizvorrichtung 1 näher erläutert werden. Wie oben bereits erwähnt, kann das unter Druck stehende, gasförmige Medium durch den Lufteinlass 304, der vorliegend im Außenrohr 306 des ersten Druckkörperteils 30 ausgebildet ist, in den Druckkörper 3 eingebracht werden. Das unter Druck stehende, gasförmige Medium durchströmt von außen nach innen den Zwischenraum 33, der zwischen dem Gehäuse 4 der Heizeinheit 2 und der Innenwand des Druckkörpers 3 ausgebildet ist und in die drei Rohrkammern 331, 332, 333 unterteilt ist.

Das unter Druck stehende Medium tritt somit durch den Lufteinlass 304 in die erste Rohrkammer 331 ein, strömt entlang der Rohrlänge zwischen dem Außenrohr 306 und dem Innenrohr 307 des ersten Druckkörperteils 30. Da der Lufteinlass 304 einseitig an dem Außenrohr 306 des zweiten Druckkörperteils 30 ausgebildet ist, wird erreicht, dass sich die unter Druck stehende Luft beziehungsweise das unter Druck stehende Gas kreisend entlang der Rohrlänge bewegt. Auf diese Weise wird dem Innenrohr 307 des ersten Druckkörperteils 30 bestmöglich die Oberflächenwärme entzogen. Anschließend tritt das Medium in die zweite Rohrkammer 332 ein, die durch das Innenrohr 307 des ersten Druckkörperteils 30 und das Innenrohr 313 des zweiten Druckkörperteils 31 gebildet ist. Das unter Druck stehende Medium strömt nun wieder entlang der gesamten Rohrlänge und tritt in die dritte Rohrkammer 333 ein, die sich aus dem Innenrohr 313 des zweiten Druckkörperteils 31 und dem Gehäuse 4 der Heizeinheit 2 ergibt. Somit kann die unter Druck stehende Luft oder das unter Druck stehende Gas bei der Durchströmung der drei Rohrkammern 331, 332, 333 bereits vorerwärmt werden und anschließend aus dem Druckraum 32 heraus in die Heizeinheit 2 strömen und dabei noch höhere Temperaturen annehmen.

Die Erwärmung der unter Druck stehenden Luft beziehungsweise des unter Druck stehenden Gases innerhalb der Heizeinheit 2 erfolgt analog zum ersten Ausführungsbeispiel und soll daher an dieser Stelle nicht erneut beschrieben werden. Mit Hilfe eines Temperaturfühlers 70 kann die Temperatur des Mediums im Bereich des trichterförmigen Heißluftaustrittsabschnitts 40 erfasst werden.

Das unter Druck stehende Medium strömt somit von außen nach innen durch mehrere Rohrkammern 331, 332, 333, gewinnt dabei bereits an Temperatur und kühlt zugleich das Außenrohr 306 des ersten Druckkörperteils 30. Da das Medium bereits vorgewärmt durch die Heizelemente 6 der Heizeinheit 2 strömen kann, weist die Heizvorrichtung 1 insgesamt eine höhere Energieeffizienz auf. Das Außenrohr 306 des ersten Druckkörperteils 30 wird aktiv gekühlt und bleibt so kalt, dass bei einer Berührung keine Verbrennungsgefahr besteht. Bei dieser Bauart der Heizvorrichtung 1 bleibt der Druckkörper 3 selbst bei Temperaturen der Heizeinheit 2 von bis zu 1000°C unbedenklich kalt, wenn unter Druck stehende Luft oder unter Druck stehendes Gas mit Raumtemperatur zugeführt wird.

Ein weiterer Vorteil des zweiten Ausführungsbeispiels der Heizvorrichtung 1 besteht ebenfalls darin, dass mit variablen Luftmengen gearbeitet werden kann. So besteht zum Beispiel die Möglichkeit, die Heizvorrichtung 1 mit sehr großen Luftmengen (bei geringem Druck) oder beim Anschluss einer kleinen Düsenanordnung, die zum Beispiel Teil einer Schneidvorrichtung zum Schneiden von Werkstücken aus Hartschaum sein kann, mit relativ kleinen Luftmassen (bei hohem Druck) zu betreiben. Auf das Gehäuse 4 der Heizeinheit 2 wirkt keine Druckbelastung mehr. Die Druckregulierung kann einlassseitig sehr einfach vorgenommen werden.

Vorzugsweise können die hier erläuterten Ausführungsbeispiele der Heizvorrichtung 1 in einer Kantenstreifenaufbringvorrichtung mit einer Düsenanordnung, wie sie aus der internationalen Patentanmeldung WO 2013/076205 A1 bekannt ist, verwendet werden. Die Heizvorrichtung 1 kann der Düsenanordnung das gasförmige Medium unter hohem Druck im Bereich von etwa 6 bis 8 bar (und mehr) und mit einer Temperatur von etwa 600° C (und mehr) zur Verfügung stellen, so dass Arbeitsgeschwindigkeiten von etwa 25 bis 30 m/min und mehr erreicht werden können. Generell besteht ein Zusammenhang zwischen der erreichbaren Arbeitsgeschwindigkeit, die mit der Kantenstreifenaufbringvorrichtung erreicht werden kann, und dem Druck und der Temperatur des gasförmigen Mediums, das von der Heizvorrichtung 1 zur Verfügung gestellt wird. Sinnvolle Temperaturbereiche für kleberlose, wärmeaktivierbare Kantenstreifen die aus zwei Schichten aus unterschiedlichen - vorzugsweise koextrudierten - Kunststoffen bestehen, liegen typischerweise zwischen etwa 300° C und 950° C. Der Arbeitsdruck des gasförmigen Mediums, der auf einfache Weise einlassseitig an der Heizvorrichtung 1 eingestellt werden kann, liegt vorzugsweise in einem Bereich zwischen etwa 1,5 bar und etwa 10 bar. Grundsätzlich ist auch ein Arbeitsdruck unter 1,5 bar möglich. Ein besonderer Vorteil der hier beschriebenen Heizvorrichtungen 1 besteht darin, dass sie im Vergleich zu den aus dem Stand der Technik bekannten Heizvorrichtungen erheblich kompakter ausgeführt werden können und deutlich kürzere Aufheizzeiten benötigen.

Weiterhin eignen sich die hier vorgestellten Heizvorrichtungen 1 zum Beispiel für eine Schneidvorrichtung zum Schneiden von Folien oder Werkstücken aus Kunststoff oder Hartschaum oder für eine Vorrichtung zum Schweißen von Werkstücken. Insbesondere bei Schneidvorrichtungen sind hohe Arbeitsdrücke wünschenswert. Durch eine geeignete Wahl der Wandstärke des Druckkörpers 3 ist es möglich, Arbeitsdrücke im Bereich von etwa 1000 bar zu erreichen.

## Patentansprüche

1. Heizvorrichtung (1), insbesondere für eine Kantenstreifenaufbringvorrichtung oder für eine Schneidvorrichtung zum Schneiden von Folien oder Werkstücken aus Kunststoff oder Hartschaum oder für eine Vorrichtung zum Schweißen von Werkstücken, umfassend eine Heizeinheit (2) mit einem Gehäuse (4), innerhalb dessen ein Grundkörper (5) angeordnet ist, der eine Mehrzahl von Luftströmungskanälen (50) aufweist, die sich zwischen einem Lufteintrittsende (51), durch den ein unter Druck stehendes, gasförmiges Medium, insbesondere Luft, in den Grundkörper (5) einströmen kann, und einem Luftaustrittsende (52), durch den das unter Druck stehende, gasförmige Medium aus dem Grundkörper (5) ausströmen kann, erstrecken, wobei in jedem der Luftströmungskanäle (50) zumindest ein Heizelement (6) untergebracht ist, mittels dessen das durch den jeweiligen Luftströmungskanal (50) strömende, unter Druck stehende, gasförmige Medium erwärmt werden kann,
wobei die Heizvorrichtung (1) einen äußeren Druckkörper (3) aufweist, innerhalb dessen die Heizeinheit (2) untergebracht ist, wobei der Druckkörper (3) einen Lufteinlass (304), durch den das unter Druck stehende, gasförmige Medium in den Druckkörper (3) einströmen kann, und einen Luftauslass (303, 303'), durch den das unter Druck stehende, gasförmige Medium nach der Erwärmung aus dem Druckkörper (3) ausströmen kann, umfasst, und wobei zwischen dem Gehäuse (4) der Heizeinheit (2) und einer Innenwand des Druckkörpers (3) ein Zwischenraum (33) ausgebildet ist, **dadurch gekennzeichnet, dass** der äußere Druckkörper (3) ein erstes Druckkörperteil (30) und zumindest ein zweites Druckkörperteil (31) aufweist, die vorzugsweise durch eine Flanschverbindung, die eine hitzebeständige Dichtung umfasst, miteinander verbunden sind, wobei der Lufteinlass (304) des äußeren Druckkörpers (3) in einem Bereich einer Mantelfläche des ersten Druckkörperteils (30) des Druckkörpers (3) ausgebildet ist, der an eine Vorderseite (302) des ersten Druckkörperteils (30) des Druckkörpers (3) angrenzt, in der der Luftauslass (303, 303') des Druckkörpers (3) ausgebildet ist, so dass das unter Druck stehende, gasförmige Medium den Zwischenraum (33) durchströmt und das Gehäuse (4) der Heizeinheit (2) vor dem Eintritt in die Luftströmungskanäle (50) umströmen kann.

2. Heizvorrichtung (1) nach Anspruch 1, **dadurch gekennzeichnet, dass** der Lufteinlass (304) als rohrförmiger Anschlussstutzen ausgebildet ist.

3. Heizvorrichtung (1) nach einem der Ansprüche 1 oder 2,
**dadurch gekennzeichnet, dass** das zweite Druckkörperteil (31) so ausgebildet ist, dass es vor dem Lufteintrittsende (51) des Grundkörpers (5) der Heizeinheit (2) einen Druckraum (32) bildet.

4. Heizvorrichtung (1) nach einem der Ansprüche 1 bis 3, **dadurch gekennzeichnet, dass** der Druckkörper (3), insbesondere das zweite Druckkörperteil (31), eine Leitungsdurchführung (312) umfasst, durch die elektrische Anschlussleitungen (10a 10b), welche an die Heizelemente (6) angeschlossen sind, hindurchgeführt sind.

5. Heizvorrichtung (1) nach Anspruch 4, **dadurch gekennzeichnet, dass** die Leitungsdurchführung (312) als Metallrohr ausgebildet ist, durch das die elektrischen Anschlussleitungen (10a 10b) elektrisch voneinander isoliert hindurchgeführt sind, wobei die elektrischen Anschlussleitungen (10a 10b) vorzugsweise mittels eines Keramikzements stoffschlüssig mit dem Metallrohr verbunden sind.

6. Heizvorrichtung (1) nach einem der Ansprüche 1 bis 5, **dadurch gekennzeichnet, dass** das Gehäuse (4) der Heizeinheit (2) in Strömungsrichtung der erwärmten Luft hinter dem Grundkörper (5) einen Heißluftaustrittsabschnitt (40) aufweist, der in den Luftauslass (303, 303') des Druckkörpers (3) mündet oder sich abschnittsweise durch den Luftauslass (303, 303') hindurch erstreckt.

7. Heizvorrichtung (1) nach Anspruch 6, **dadurch gekennzeichnet, dass** der Heißluftaustrittsabschnitt (40) sich zu dem an der Vorderseite (302) des Druckkörpers (3) ausgebildeten Luftauslass (303, 303') hin verjüngend, insbesondere trichterförmig, ausgebildet ist.

8. Heizvorrichtung (1) nach einem der Ansprüche 1 bis 7, **dadurch gekennzeichnet, dass** der Zwischenraum (33) in mindestens zwei Rohrkammern (331, 332, 333) unterteilt ist, durch die das unter Druck stehende, gasförmige Medium von außen nach innen strömen kann.

9. Kantenstreifenaufbringvorrichtung zur Beaufschlagung eines kleberlosen, wärmeaktivierbaren oder mit Heißkleber beschichteten Kantenstreifens oder Werkstücks mit Heißluft, umfassend eine Heizvorrichtung (1) und eine Düsenanordnung, die luftauslassseitig an die Heizvorrichtung (1) angeschlossen ist, **dadurch gekennzeichnet, dass** die Heizvorrichtung (1) nach einem der Ansprüche 1 bis 8 ausgebildet ist.

## Claims

1. Heating device (1), in particular for an edge strip application device or for a cutting device for cutting films or workpieces made of plastic or rigid foam or for a device for welding workpieces, comprising a heating unit (2) with a housing (4), within which a main body (5) is arranged, which has a plurality of air flow channels (50), which extend between an air inlet end (51), through which a pressurized gaseous medium, in particular air, can flow into the main body (5), and an air outlet end (52), through which the pressurized gaseous medium can flow out of the main body (5), wherein at least one heating element (6) is located in each of the air flow channels (50), by means of which the pressurized gaseous medium flowing through the respective air flow channel (50) can be heated,
wherein the heating device (1) has an outer pressure body (3), within which the heating unit (2) is located, wherein the pressure body (3) comprises an air inlet (304), through which the pressurized gaseous medium can flow into the pressure body (3), and an air outlet (303, 303'), through which the pressurized gaseous medium can flow out of the pressure body (3) after heating, and wherein a space (33) is formed between the housing (4) of the heating unit (2) and an inner wall of the pressure body (3), **characterised in that** the outer pressure body (3) has a first pressure body part (30) and at least one second pressure body part (31), which are preferably connected to each other by a flange connection, which comprises a heat-resistant seal, wherein the air inlet (304) of the outer pressure body (3) is formed in a region of a lateral surface of the first pressure body part (30) of the pressure body (3), which adjoins the pressure body (3) on a front side (302) of the first pressure body part (30), in which the air outlet (303, 303') of the pressure body (3) is formed, such that the pressurized gaseous medium flows through the space (33) and can flow around the housing (4) of the heating unit (2) before entering the air flow channels (50).

2. Heating device (1) according to claim 1, **characterised in that** the air inlet (304) is formed as a tubular connection piece.

3. Heating device (1) according to any of claims 1 or 2, **characterised in that** the second pressure body part (31) is designed such that it forms a pressure chamber (32) in front of the air inlet end (51) of the main body (5) of the heating unit (2).

4. Heating device (1) according to any of claims 1 to 3, **characterised in that** the pressure body (3), in particular the second pressure body part (31), comprises a cable feed-through (312), through which the electrical connecting cables (10a, 10b), which are connected to the heating elements (6), are guided.

5. Heating device (1) according to claim 4, **characterised in that** the cable feed-through (312) is designed as a metal tube, through which the electrical connecting cables (10a, 10b) are guided electrically insulated from each other, wherein the electrical connecting cables (10a, 10b) are preferably firmly connected to the metal tube by means of a ceramic cement.

6. Heating device (1) according to any of claims 1 to 5, **characterised in that** the housing (4) of the heating unit (2) has a hot air outlet section (40) in the flow direction of the heated air behind the main body (5), which opens into the air outlet (303, 303') of the pressure body (3) or extends in sections through the air outlet (303, 303').

7. Heating device (1) according to claim 6, **characterised in that** the hot air outlet section (40) is designed to taper towards the air outlet (303, 303') formed on the front side (302) of the pressure body (3), in particular in the form of a funnel.

8. Heating device (1) according to any of claims 1 to 7, **characterised in that** the space (33) is divided into at least two tubular chambers (331, 332, 333), through which the pressurized gaseous medium can flow from the outside to the inside.

9. Edge strip application device for applying hot air to an adhesive-free, heat-activatable or hot-melt coated edge strip or workpiece, comprising a heating device (1) and a nozzle arrangement, which is connected on the air outlet side to the heating device (1), **characterised in that** the heating device (1) is designed according to any of claims 1 to 8.

## Revendications

1. Dispositif de chauffage (1), en particulier pour un dispositif d'application de bande de chant ou pour un dispositif de coupe permettant de couper des feuilles ou des pièces en matière plastique ou en mousse rigide ou pour un dispositif permettant de souder des pièces, comprenant une unité de chauffage (2) avec un boîtier (4) à l'intérieur duquel est agencé un corps de base (5) présentant une pluralité de canaux de circulation d'air (50) s'étendant entre une extrémité d'entrée d'air (51), à travers laquelle un milieu gazeux sous pression, en particulier de l'air, peut entrer dans le corps de base (5), et une extrémité de sortie d'air (52) à travers laquelle le milieu gazeux sous pression peut sortir du corps de base (5), dans lequel au moins un élément chauffant (6), au moyen duquel le milieu gazeux sous pression circulant à travers le canal de circulation d'air (50) respectif peut être chauffé, est hébergé dans chacun des canaux de circulation d'air (50),
dans lequel le dispositif de chauffage (1) présente un corps de pression externe (3) à l'intérieur duquel l'unité de chauffage (2) est hébergée, dans lequel le corps de pression (3) comprend une entrée d'air (304), à travers laquelle le milieu gazeux sous pression peut entrer dans le corps de pression (3), et une sortie d'air (303, 303') à travers laquelle le milieu gazeux sous pression peut sortir du corps de pression (3) après le chauffage, et dans lequel un espace intermédiaire (33) est formé entre le boîtier (4) de l'unité de chauffage (2) et une paroi interne du corps de pression (3), **caractérisé en ce que** le corps de pression externe (3) présente une première partie de corps de pression (30) et au moins une seconde partie de corps de pression (31) qui sont reliées l'une à l'autre de manière préférée par une liaison à bride comprenant un joint résistant à la chaleur,
dans lequel l'entrée d'air (304) du corps de pression externe (3) est formée dans une région d'une surface latérale de la première partie de corps de pression (30) du corps de pression (3) qui est adjacente à un côté avant (302), au sein duquel la sortie d'air (303, 303') du corps de pression (3) est formée, de la première partie de corps de pression (30) du corps de pression (3) de sorte que le milieu gazeux sous pression parcourt l'espace intermédiaire (33) et peut circuler autour du boîtier (4) de l'unité de chauffage (2) avant d'entrer dans les canaux de circulation d'air (50).

2. Dispositif de chauffage (1) selon la revendication 1, **caractérisé en ce que** l'entrée d'air (304) est réalisée sous la forme d'un raccord tubulaire.

3. Dispositif de chauffage (1) selon la revendication 1 ou 2, **caractérisé en ce que** la seconde partie de corps de pression (31) est réalisée de sorte qu'elle forme une chambre de pression (32) devant l'extrémité d'entrée d'air (51) du corps de base (5) de l'unité de chauffage (2).

4. Dispositif de chauffage (1) selon l'une quelconque des revendications 1 à 3, **caractérisé en ce que** le corps de pression (3), en particulier la seconde partie de corps de pression (31), comprend un passage pour lignes (312) à travers lequel sont guidées des lignes de raccordement électriques (10a, 10b) raccordées aux éléments chauffants (6).

5. Dispositif de chauffage (1) selon la revendication 4, **caractérisé en ce que** le passage pour lignes (312) est réalisé sous la forme d'un tube métallique à travers lequel les lignes de raccordement électrique (10a, 10b) sont guidées de manière électriquement isolée les unes des autres, dans lequel les lignes de raccordement électrique (10a, 10b) sont de manière préférée reliées au tube métallique par assemblage de matière au moyen d'un ciment céramique.

6. Dispositif de chauffage (1) selon l'une quelconque des revendications 1 à 5, **caractérisé en ce que** le boîtier (4) de l'unité de chauffage (2) présente, en aval du corps de base (5) dans le sens de circulation de l'air chauffé, une section de sortie d'air chaud (40) qui débouche dans la sortie d'air (303, 303') du corps de pression (3) ou qui s'étend par sections à travers la sortie d'air (303, 303').

7. Dispositif de chauffage (1) selon la revendication 6, **caractérisé en ce que** la section de sortie d'air chaud (40) est réalisée de manière à se rétrécir, en particulier en forme d'entonnoir, vers la sortie d'air (303, 303') formée au niveau de la face avant (302) du corps de pression (3).

8. Dispositif de chauffage (1) selon l'une quelconque des revendications 1 à 7, **caractérisé en ce que** l'espace intermédiaire (33) est divisé en au moins deux chambres tubulaires (331, 332, 333) à travers lesquelles le milieu gazeux sous pression peut circuler de l'extérieur vers l'intérieur.

9. Dispositif d'application de bande de chant permettant d'appliquer de l'air chaud sur une bande de chant, ou une pièce d'œuvre, dépourvue de colle, pouvant être activée par de la chaleur ou revêtue de colle chaude, comprenant un dispositif de chauffage (1) et un agencement de buse raccordée, du côté de la sortie d'air, au dispositif de chauffage (1), **caractérisé en ce que** le dispositif de chauffage (1) est réalisé selon l'une quelconque des revendications 1 à 8.
